# EUROPEAN PATENT SPECIFICATION

(11) **EP 4 111 310 B1**
(45) Date of publication and mention of the grant of the patent: **10.12.2025**
(21) Application number: 20828551.0
(22) Date of filing: 06.10.2020
(51) Int. Cl.: G06F 9/48, H04L 41/14, H04L 41/40, H04L 43/026, H04L 43/0876, H04L 43/20, H04L 47/10, H04L 47/2483, H04L 47/6275

(54) **DEVICE AND METHOD FOR COFLOW TRACKING AND SCHEDULING**
VORRICHTUNG UND VERFAHREN ZUR COFLOW-VERFOLGUNG UND -PLANUNG
DISPOSITIF ET PROCÉDÉ DE SUIVI ET DE PLANIFICATION DE CO-FLUX

(43) Date of publication of application: 04.01.2023
(73) Proprietor: Huawei Technologies Co., Ltd., Shenzhen, Guangdong 518129 (CN); Avignon Université, 84029 Avignon (FR)
(72) Inventor: RICHIER, Cédric, 84140 Avignon (FR); DE PELLEGRINI, Francesco, 84140 Avignon (FR); EL-AZOUZI, Rachid, 84140 Avignon (FR); LEGUAY, Jérémie, 80992 Munich (DE); MARTIN, Sebastien, 80992 Munich (DE); MAGNOUCHE, Youcef, 80992 Munich (DE)
(74) Representative: Roth, Sebastian
(86) International application number: PCT/IB2020/000919
(87) International publication number: WO 2022/074415

(56) References cited:
- CN-A- 108 712 305
- CN-A- 110 708 259
- US-A1- 2019 089 645

## Description

### TECHNICAL FIELD

The present disclosure relates to communication networks, and particularly to coflow tracking and scheduling in communication networks. In order to optimize the scheduling of coflows in networks, the disclosure proposes an improved coflow tracking device and an improved coflow scheduling device.

### BACKGROUND

In the last decade, the ever-increasing volume of data collected and processed by applications has boosted the adoption of distributed computing frameworks. Currently, applications and services running in datacenters have to deal with larger and larger volumes of data. Datasets are collected from diverse sources like, for instance, user activity logs from web applications, traces from connected equipment, or output data of scientific experiments. Data processing applications and services are built and deployed in large clusters of machines, in order to take advantage of distributed computing and I/O parallelism. In the process, the traditional one-to-one client/server communication model has given way to higher-level communication patterns that involve a large number of machines communicating with each other. Indeed, distributed data-parallel applications run on many machines in parallel by dividing the whole work (i.e., a job) into smaller pieces (i.e., individual tasks). This enables a large variety of use cases including structured query language (SQL) queries, log analysis, machine learning activities, and graph processing. These applications interact with cluster resource managers to get access to a central processing unit (CPU), a memory, and disk capacities. They also leverage different techniques for task scheduling, data access, and failure management. Most distributed data-parallel applications are software frameworks (e.g., MapReduce) that execute user-defined computational tasks and follow specific workflows based on various programming models. Example of such applications are MapReduce, Spark, Giraph, Pregel.

To accelerate the execution of data-parallel processing applications, the typical target is to schedule operations in view of minimizing the average or the maximum completion time of jobs. Recent studies on MapReduce have shown that on average, the shuffle phase accounts for 33% of the running time in these jobs. In addition, 26% of the jobs with reduce task, shuffles account for more than 50% the running time, and in 16% of jobs, they account for more than 70% of the running time. This confirms widely reported results that the network is a bottleneck in MapReduce. As a coflow is completed only when all its constituent flows are finished, it does not make sense to optimize the transfer of isolated flows without taking into account their membership to coflows.

In general, to efficiently allocate bandwidth to a flow in a coflow, a network controller needs to get some information on the structure of the coflow. For instance, the list of flows of the coflow with IP endpoints and the volume of data that these flows need to transfer. The main problem in this case is how to get this information, particularly without modifying applications or big data frameworks.

CN 110 708 259 A1 discloses an information-insensitive Coflow scheduling mechanism DeepAalo, which minimizes the completion time of Coflow by automatically adjusting the threshold of the priority queue. US 2019/089645 A1 discloses a dynamic scheduling algorithm and a hybrid of centralized and decentralized scheduling system to improve the performance of DCN and data parallel application. CN 108 712 305 A1 discloses a Coflow scheduling method based on subflow flow value estimation method.

### SUMMARY

In view of the above-mentioned limitations, embodiments of the present disclosure aim to introduce devices and methods for tracking coflows and for scheduling coflows in a framework independent fashion, specifically without modifying current and future big data frameworks. In particular, an objective is to provide a solution that can operate externally with respect to applications responsible for coflow generation. One aim is to accelerate the execution of data-parallel processing applications.

The objective is achieved by embodiments as provided in the enclosed independent claims. Advantageous implementations of the embodiments are further defined in the dependent claims.

A first aspect of the disclosure provides a tracking device for tracking one or more coflows in a network, wherein each coflow comprises one or more flows, wherein the tracking device is configured to: receive, from one or more external applications that generate the one or more coflows, a first set of coflow information of the one or more coflows, wherein the first set of coflow information is indicative of information retrieved from the one or more coflows; estimate a second set of coflow information of the one or more coflows based on the first set of coflow information, wherein the second set of coflow information of each coflow of the one or more coflows comprises one of more of the following parameters: a size of the coflow, a remaining size of the coflow, a size distribution of the one or more flows of the coflow, a number of the one or more flows of the coflow, a length of the coflow, and one or more demand vectors of the one or more flows of the coflow; and merge the first set of coflow information and the second set of coflow information, to obtain a merged coflow information of the one or more coflows. The tracking device is further configured to provide the merged coflow information of the one or more coflows to a scheduling device for scheduling the one or more coflows in the network.

Embodiments of the disclosure accordingly propose a tracking device that operates externally with respect to the external applications, which are responsible for coflow generation. Notably, a coflow comprises a collection of flows between two groups of machines that are bound together by an application-specific task. In particular, after estimating missing information that cannot be exactly reconstructed or retrieved using the external applications, the tracking device may integrate the missing information with information retrieved from the external applications. External application means that the application is not running on the tracking device. The tracking device further passes the knowledge about coflows to the scheduling device. Accordingly, the scheduling device may decide bandwidth sharing of coflows in view of optimizing coflow completion time (CCT) (e.g., average, max, deadlines). Notably, the second set of coflow information may comprise information that is estimated by the tracking device. Particularly, the estimation may be performed based on the information retrieved from one or more external applications.

In an implementation form of the first aspect, the first set of coflow information of each coflow of the one or more coflows is indicative of one or more of the following parameters: a list of the one or more flows of the coflow, a source node and a destination node of each of the one or more flows of the coflow, a number of the one or more flows of the coflow, a status of the one or more flows of the coflow, one or more counters associated with the coflow, an expected completion time of the coflow, a priority level of the coflow, and a type of the coflow.

Notably, the first set of coflow information may comprise information that can be directly retrieved from one or more external applications.

In an implementation form of the first aspect, the tracking device is configured to estimate a remaining size of at least one coflow of the one or more coflows based on the one or more counters associated with the at least one coflow.

For instance, by comparing the number of key/value records that have been received and the number of records that had to be transferred, missing information about the remaining volumes of individual flows may be estimated. Accordingly, the remaining size of a coflow may be further estimated.

In an implementation form of the first aspect, the tracking device is configured to estimate a size of an individual flow of the one or more flows of the coflow by dividing the size of the coflow by the number of the one or more flows of the coflow.

In an implementation form of the first aspect, the tracking device is further configured to: repetitively receive updated first set of coflow information of the one or more coflows in the network; repetitively update the second set of coflow information of the one or more coflows; and repetitively update the merged coflow information of the one or more coflows.

Notably, estimated information may be updated according to the updated retrieved information. Accordingly, the merged coflow information may also be updated. Possibly, the updated merged information may be passed to the scheduling device, for instance, for rescheduling the bandwidth sharing of coflows.

In an implementation form of the first aspect, the merged coflow information of the one or more coflows comprises: a coflow identifier (ID) of each coflow of the one or more coflows, and at least one of the first set of coflow information of the one or more coflows, and the second set of coflow information of the one or more coflows.

Optionally, a data format passed to the scheduling device may be formed by: 1) the coflow ID, 2) a record of deterministic data, and/or 3) a record of estimated data; wherein any field can be left empty, but preferably not the coflow ID. Notably, the first set of coflow information may be considered as the deterministic data, and the second set of coflow information may be considered as the estimated data.

In an implementation form of the first aspect, the tracking device is further configured to receive the first set of coflow information of the one or more coflows from one or more application program interfaces (APIs) and/or one or more application log files, particularly from a big data application and/or from a resource manager.

In particular, the tracking device may retrieve coflow information from big data application APIs and/or logs. That is, this disclosure proposes a solution that does not require a modification of big data applications. It is worth mentioning that the tracking device can work with several such applications in parallel.

In an implementation form of the first aspect, the tracking device is merged or installed in a controller of the network.

Optionally, the tracking device may be a part of a network controller. In particular, the network controller may be an SDN controller. The tracking device may be hosted in the network controller.

A second aspect of the disclosure provides a method for tracking one or more coflows in a network, wherein each coflow comprises one or more flows, wherein the method comprises: receiving, from one or more external applications that generate the one or more coflows, a first set of coflow information of the one or more coflows, wherein the first set of coflow information is indicative of information retrieved from the one or more coflows; estimating a second set of coflow information of the one or more coflows based on the first set of coflow information; and merging the first set of coflow information and the second set of coflow information, to obtain a merged coflow information of the one or more coflows, wherein the second set of coflow information of each coflow of the one or more coflows comprises one of more of the following parameters: a size of the coflow, a remaining size of the coflow, a size distribution of the one or more flows of the coflow, a number of the one or more flows of the coflow, a length of the coflow, and one or more demand vectors of the one or more flows of the coflow; and providing the merged coflow information of the one or more coflows to a scheduling device for scheduling the one or more coflows in the network.

Implementation forms of the method of the second aspect may correspond to the implementation forms of the tracking device of the first aspect described above. The method of the second aspect and its implementation forms achieve the same advantages and effects as described above for the tracking device of the first aspect and its implementation forms.

A third aspect of the disclosure provides a computer program product comprising a program code for carrying out, when implemented on a processor, the method according to the second aspect and any implementation forms of the third aspect.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

In an implementation form of the first aspect, the tracking device is further configured to receive the first set of coflow information of the one or more coflows from one or more application program interfaces (APIs) and/or one or more application log files, particularly from a big data application and/or from a resource manager.

In particular, the tracking device may retrieve coflow information from big data application APIs and/or logs. That is, this disclosure proposes a solution that does not require a modification of big data applications. It is worth mentioning that the tracking device can work with several such applications in parallel.

In an implementation form of the first aspect, the tracking device is merged or installed in a controller of the network.

Optionally, the tracking device may be a part of a network controller. In particular, the network controller may be an SDN controller. The tracking device may be hosted in the network controller.

A second aspect of the disclosure provides a scheduling device for scheduling one or more coflows in a network, wherein each coflow comprises one or more flows, wherein the scheduling device is configured to: obtain a merged coflow information of the one or more coflows from a tracking device, wherein the merged coflow information of the one or more coflows is merged based on a first set of coflow information of the one or more coflows and a second set of coflow information of the one or more coflows, wherein the first set of coflow information of the one or more coflows is indicative of information retrieved from the one or more coflows, and the second set of coflow information of the one or more coflows is estimated based on the first set of coflow information of the one or more coflows; and adapt the scheduling of the one or more coflows according to the merged coflow information of the one or more coflows.

Embodiments of the disclosure accordingly also propose a scheduling device for scheduling and adapting the scheduling of the one or more coflows. In particular, the output of the tracking device, which is provided according to embodiments of the disclosure, is passed to the scheduling device, e.g., for deciding the bandwidth share per-flow and per-coflow.

In an implementation form of the second aspect, the scheduling device is further configured to: repetitively obtain updated merged coflow information of the one or more coflows from the tracking device; and repetitively adapt the scheduling of the one or more coflows according to the updated merged coflow information of the one or more coflows.

As previously described, the merged coflow information of the one or more coflows may be repetitively updated by the tracking device. That is, the scheduling device may repetitively or continuously adapt the scheduling accordingly.

In an implementation form of the second aspect, the scheduling device is further configured to minimize an average completion time of the one or more coflows, based on the merged coflow information of the one or more coflows, and/or the updated merged coflow information of the one or more coflows; and/or minimize a maximum completion time of the one or more coflows, based on the merged coflow information of the one or more coflows, and/or the updated merged coflow information of the one or more coflows.

Optionally, the merged coflow information, especially the estimated coflow information, are provided to the scheduling device for optimizing CCT. In particular, the optimization of CCT may be considered as to minimize an average CCT or to minimize a maximum CCT.

A third aspect of the disclosure provides a method for tracking one or more coflows in a network, wherein each coflow comprises one or more flows, wherein the method comprises: receiving, from one or more external applications that generate the one or more coflows, a first set of coflow information of the one or more coflows, wherein the first set of coflow information is indicative of information retrieved from the one or more coflows;
estimating a second set of coflow information of the one or more coflows based on the first set of coflow information; and merging the first set of coflow information and the second set of coflow information, to obtain a merged coflow information of the one or more coflows.

Implementation forms of the method of the third aspect may correspond to the implementation forms of the tracking device of the first aspect described above. The method of the third aspect and its implementation forms achieve the same advantages and effects as described above for the tracking device of the first aspect and its implementation forms.

A fourth aspect of the disclosure provides a method for scheduling one or more coflows in a network, wherein each coflow comprises one or more flows, wherein the method comprises: obtaining a merged coflow information of the one or more coflows from a tracking device, wherein the merged coflow information of the one or more coflows is merged based on a first set of coflow information of the one or more coflows and a second set of coflow information of the one or more coflows, wherein the first set of coflow information of the one or more coflows is indicative of information retrieved from the one or more coflows, and the second set of coflow information of the one or more coflows is estimated based on the first set of coflow information of the one or more coflows; and adapting the scheduling of the one or more coflows according to the merged coflow information of the one or more coflows.

Implementation forms of the method of the fourth aspect may correspond to the implementation forms of the scheduling device of the second aspect described above. The method of the fifth aspect and its implementation forms achieve the same advantages and effects as described above for the scheduling device of the second aspect and its implementation forms.

A fifth aspect of the disclosure provides a computer program product comprising a program code for carrying out, when implemented on a processor, the method according to the third aspect and any implementation forms of the third aspect, or the fourth aspect and any implementation forms of the fourth aspect.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present disclosure will be explained in the following description of specific embodiments in relation to the enclosed drawings, in which:
- FIG. 1: shows a tracking device according to an embodiment of the disclosure;
- FIG. 2: shows a multi-stage data flow;
- FIG. 3: shows a system architecture according to an embodiment of the disclosure;
- FIG. 4: shows a sequence diagram of information retrieval timing according to an embodiment of the disclosure;
- FIG. 5: shows a coflow traffic on a non-blocking switch according to an embodiment of the disclosure;
- FIG. 6: shows a response body returned from APIs in Hadoop according to an embodiment of the disclosure;
- FIG. 7: shows a response body returned from APIs in Hadoop according to an embodiment of the disclosure;
- FIG. 8: shows a response body returned from APIs in Hadoop according to an embodiment of the disclosure;
- FIG. 9: shows a scheduling device according to an embodiment of the disclosure;
- FIG. 10: shows a method according to an embodiment of the disclosure; and
- FIG. 11: shows a method according to an embodiment of the disclosure.

### DETAILED DESCRIPTION OF EMBODIMENTS

Illustrative embodiments of a method, device, and program product for tracking or scheduling coflows in a communication system are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

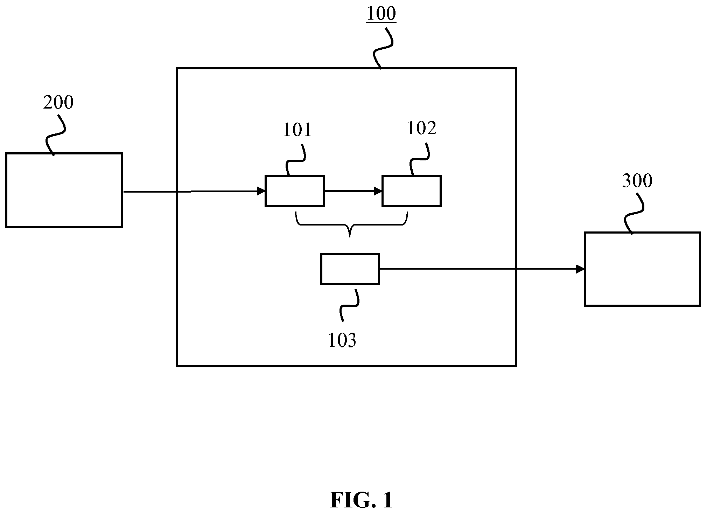

FIG. 1 shows a tracking device 100 adapted for tracking one or more coflows in a network according to an embodiment of the disclosure. The tracking device 100 may comprise processing circuitry (not shown) configured to perform, conduct or initiate the various operations of the tracking device 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The tracking device 100 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the tracking device 100 to be performed. In one embodiment, the processing circuitry comprises one or more processors and a non-transitory memory connected to the one or more processors. The non-transitory memory may carry executable program code which, when executed by the one or more processors, causes the tracking device 100 to perform, conduct or initiate the operations or methods described herein.

In particular, the tracking device 100 is configured to receive, from one or more external applications 200 that generate the one or more coflows, a first set of coflow information 101 of the one or more coflows. The first set of coflow information 101 is indicative of information retrieved from the one or more coflows. That is, the first set of coflow information 101 may represent exact information on the one or more coflows, for instance the information with respect to a certain set of parameters.

The tracking device 100 is further configured to estimate a second set of coflow information 102 of the one or more coflows based on the first set of coflow information 101. Notably, the second set of information 102 may be considered as missing information of the one or more coflows, i.e., information, which cannot be exactly reconstructed or retrieved from external applications. For instance, how a coflow volume is distributed among its composing flows may represent a crucial parameter for some scheduling algorithms of the coflows. However, such information may not be directly available when using some external applications, such as MapReduce API.

Then the tracking device 100 is further configured to merge the first set of coflow information 101 and the second set of coflow information 102, to obtain a merged coflow information 103 of the one or more coflows.

Optionally, the tracking device 100 may be further configured to provide the merged coflow information 103 of the one or more coflows to a scheduling device 300 for scheduling the one or more coflows in the network.

The one or more external applications 200, which generate the one or more coflows, may comprise one or more APIs and/or one or more application log files, for instance, of a big data application and/or from a resource manager.

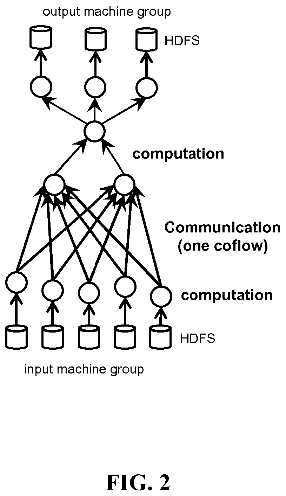

Typically, big data applications in distributed computing data centers generate so called "multi-stage data flows" as shown in FIG. 2, where computation phases are interleaved with communication phases. As previously described, the set of flows in one communication phase is called a coflow. It may also be called as a shuffle phase in MapReduce. The coflow comprises a collection of flows between two groups of machines that are bound together by an application-specific task. As an example depicted in FIG. 2, input data are read from a distributed file system, e.g., Hadoop Distributed File System (HDFS). Further, several steps of map and reduce operations are applied on the data, before results are stored back to HDFS. Most of distributed data parallel applications share such common global property: they run on a large number of machines that are organized into multiple stages (e.g., super steps in a Bulk Synchronization Protocol (BSP) model) and/or are grouped by functionalities (e.g., mappers and reducers in the MapReduce model). Each of these groups communicate with each other, forming coflows that can take a few specific structures based on typical communication patterns such as shuffle (many-to-many), broadcast (one-to-many), aggregation (many-to-one), parallel read/write on distributed storage (many one-to-one), and global communication barriers (all-to-all) as in the BSP model.

As described in the background part of this disclosure, it may be beneficial to get information on the structure of the coflow for efficiently allocating bandwidth to flows in the coflows. Conventionally, there are two approaches for network controllers to access such coflow information. In the first approach, big data application is modified and instrumented to use a specific coflow scheduling API in the network controller. Through this API, explicit information on the coflow is passed to a network scheduler (e.g., topology, the volume of data to be transferred, and priority) and the network scheduler is generally pre-emptive. A flow transfer has to wait, through a blocking call, for the go from the network controller.

The second approach is called blind or non-clairvoyant scheduling. This approach uses flow level measurements to identify coflow membership of flows using machine learning. The scheduling of individual flows is performed based on an automatic classification of flows (possibly with errors).

Embodiments of the disclosure propose a coflow tracker module (i.e., the tracking device 100) that may retrieve coflow information from big data applications APIs and logs. The tracking device 100 may be a part of a network controller. It is worth mentioning that the tracking device 100 does not require a modification of big data applications, and it can work with several applications in parallel. It is not blind, as it explicitly retrieves some available coflow information, for instance, from big data application APIs and logs. Further, as critical information can be missing, the tracking device 100 according to embodiments of the disclosure can additionally infer missing data, such as the volume of data that each flow has to transfer, and may provide missing critical information, for instance to the scheduling device 300, for coflow traffic scheduling.

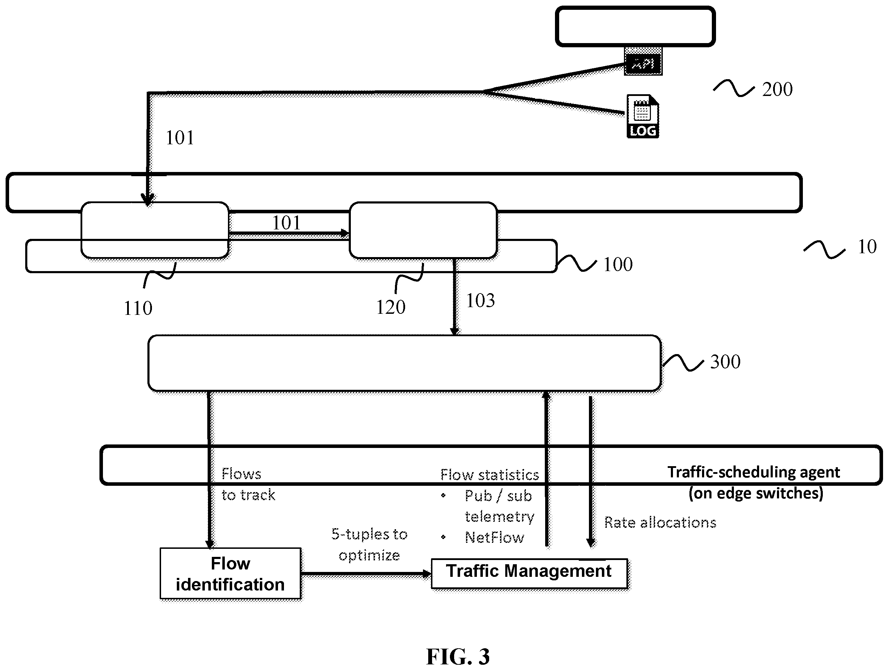

FIG. 3 depicts a system architecture for tracking and scheduling coflows according to an embodiment of this disclosure. The tracking device 100 shown in FIG. 3 may be the tracking device 100 as shown in FIG. 1. In particular, the tracking device 100 may comprise a coflow information retrieval module 110 and a coflow inference module 120. As shown in FIG. 3, the tracking device 100 can operate externally with respect to the one or more external applications 200. The one or more external applications 200 may be the one or more external applications 200 as shown in FIG. 1. The one or more external applications 200 may comprise for example a big data application responsible for coflow generation, such as MapReduce or Spark, and/or a specific resource management framework that allocated computational resources, e.g., YARN or Hadoop (as the icons "API" and "LOG" shown in FIG. 3). It can be seen that the tracking device 100 is also independent of the specific resource management framework. Information about involved end-points, job status, counters are retrieved from the one or more external applications 200.

This structure allows providing modularity to the overall design. Some information on the coflow structure and the coflow volume distribution can be reconstructed starting from the framework's APIs. Since different APIs are available for each specific framework, in practice it is possible to operate coflow scheduling in a framework independent fashion and without modifying current and future big data frameworks.

According to this embodiment, the tracking device 100 may be merged or installed in a network controller 10. At the network controller level, the tracking device 100 consolidates and continuously updates the information about coflows (e.g., their layout, status) that can be retrieved from big data applications (e.g., MapReduce) and resource management frameworks (e.g., YARN for Hadoop). The tracking device 100 further provides inferred data for missing information (e.g., flow volumes) that are useful to optimize the CCT.

In practice, the output (i.e., the merged coflow information 103, as shown in FIG. 1 or FIG. 3) of the tracking device 100 is passed to a traffic scheduler (i.e., the scheduling device 300 as shown in FIG. 3) to decide a bandwidth share per-flow and per coflow. The scheduling device 300 may optimize the CCT, in terms of minimizing the average CCT or minimizing the maximum CCT. Such optimization is performed in view of optimizing the coflow utility with respect to selected metrics, e.g., average CCT or per coflow deadlines. While the implementation of the scheduling device 300 may be centralized or distributed, in all cases, the scheduling device 300 running on the network controller 10 preferably binds to modules running on the switches. The examples of modules running on edge switches are shown in FIG. 3. It should be noted that these modules are provided merely as examples for describing the present disclosure, but not for limiting the present disclosure. In particular, the switches are those, which perform flow identification (e.g., detect that a flow of a given coflow has become active or has terminated), and those which perform the local traffic scheduling implementing the actual coflow rate allocation.

According to an embodiment, the coflow information retrieval module 110 may provide exact information on coflows with respect to a certain set of parameters (i.e., the first set of coflow information 101 as shown in FIG. 1), such as the coflow layout, their status, or various counters. Such type of parameters may also include the IP of the source and destination nodes of flows composing a coflow.

According to an embodiment, the coflow inference module 120 may be in charge of integrating missing information (i.e., the second set of coflow information 102 as shown in FIG. 1), i.e., information that cannot be exactly reconstructed, or retrieved using the APIs of frameworks or logs. Such information includes volume, flow size distribution, and demand vector (i.e., ratio of flow sizes in a coflow). For instance, how the coflow volume is distributed among its composing flows represents a crucial parameter in the framework of coflow scheduling algorithms. However, such information is not directly available using MapReduce APIs and it requires indeed some inference logic.

In order to support the identification of the coflow structure, it is possible to consider a coflow information model sufficiently flexible and modular to be compatible with different frameworks. Since each framework is bound to expose specific information about running processes and eventually about the data transfers they require, a first major distinction should be operated between coflow data that can be measured directly using one or more APIs and coflow data that are information not supported by the frameworks.

Hence, a data format (with respect to a coflow) that is passed to the scheduling device 300 may be formed by: 1) a coflow ID, 2) a record of deterministic data, and/or 3) a record of estimated data. Notably, any field can be left empty, however, preferably the coflow ID is not empty.

The coflow ID can be derived by tracking flows issued by tasks of a specific job generated by the framework. It is assumed that such information is always available irrespective of the concerned framework.

The deterministic data may concern all the coflow information that can be directly or indirectly measured using the frameworks API. In particular, it may comprise coflow-level and flow-level information, wherein at the coflow-level the basic information may comprise a number of flows (i.e., a width of the coflow), and a state of a coflow when deterministically available, i.e., whether it is active, inactive, or aborted (e.g., in case of application master failure). In addition, it may carry the actual progress of a job, when it is made available. Furthermore, a list of optional features (e.g., deadline, priority level, type of coflow etc.) complements this record. At the flow-level, the information available for each flow of a coflow may include a flow ID, a parent coflow ID, a pair of source and destination IP addresses, when deterministically available, e.g., in MapReduce. Finally, each flow state can be reported as well as active, inactive, or aborted (e.g., in case of a related task failure).

The deterministic data may be the first set of coflow information 101 of each coflow of the one or more coflows as shown in FIG. 1. According to an embodiment of the disclosure, the first set of coflow information 101 of each coflow of the one or more coflow may be indicative of one or more of a list of the one or more flows of the coflow, a source node and a destination node of each of the one or more flows of the coflow, a number of the one or more flows of the coflow, a status of the one or more flows of the coflow, one or more counters associated with the coflow, an expected completion time of the coflow, a priority level of the coflow, and a type of the coflow.

The estimated data, may also be names as inferred data, may consists of coflow-level and flow-level estimations. At the coflow level, the estimated parameters may comprise a coflow size, i.e., the total volume of data to be transferred, a coflow width (a number of flows) in the case the framework does not provide primitives to measure it, a coflow length (i.e., a size of the heaviest flow comprised in the coflow), the demand vector (i.e., a volume ratio of the volume of flows within the coflow), and an estimated distribution of flow volumes in the coflow. Furthermore, flow-level estimations can be made available for each flow of a coflow, mainly concerning flow volumes such as the current per flow volume transferred, the forecasted volume of a tagged flow in a coflow, and a confidence level on such estimations.

The estimated data may be the second set of coflow information 102 of each coflow of the one or more coflows as shown in FIG. 1. According to an embodiment of the disclosure, the second set of coflow information 102 of each coflow of the one or more coflows may comprise one of more of a size of the coflow, a remaining size of the coflow, a size distribution of the one or more flows of the coflow, a number of the one or more flows of the coflow, a length of the coflow, and one or more demand vectors of the one or more flows of the coflow.

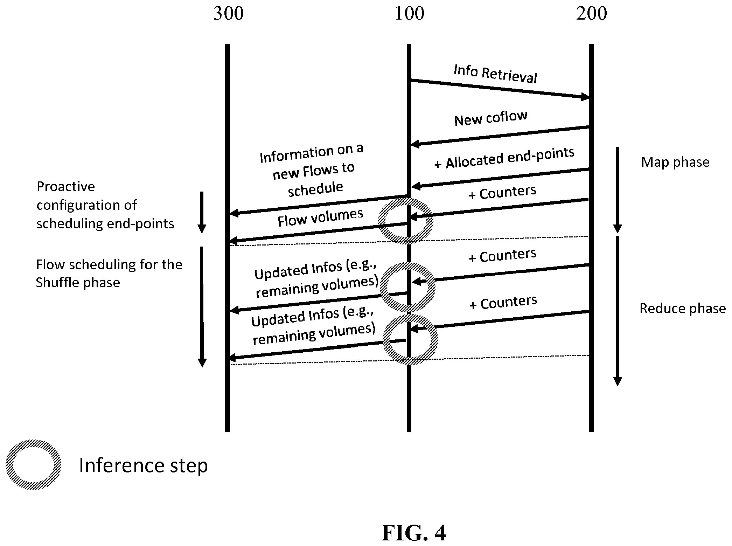

For any big data application, the tracking device 100 may maintain a list of all running and pending jobs, and may routinely perform certain operations, as represented by a sequence diagram shown in FIG. 4.

First, the coflow information retrieval module 110 may collect for all active and pending jobs two sets of parameters: a list of active tasks and counter values. In particular, the list of active tasks may contain identifiers of end-points involved and the task type (e.g., mapper / reducer). Notably, from this list it is possible to reconstruct the actual pair of IP addresses that belong to each flow. The counters values allow updating the coflow information, includes a coflow structure, the current status, and the related counters. For instance in Hadoop, counters that can be retrieved may include MAP_OUTPUT_BYTES or MAP_OUTPUT_RECORDS, which presents the amount of data/records that will be transferred by the coflow. Notably, in Hadoop, MapReduce works by breaking the data processing into two phases: Map phase and Reduce phase. The Map phase is the first phase of processing, where all the complex logic/business rules/costly code will be specified. Reduce phase is the second phase of processing, where lightweight processing like aggregation/summation will be specified. The MAP_OUTPUT_BYTES counter, which may be used when the Map phase is over, represents the coflow size. A REDUCE_INPUT_RECORDS counter may represent a number of data entries that have been received by reducers. That is, counters may be "recorded" to estimate the progress of the coflow (i.e., the remaining size of the coflow).

Then, the coflow inference module 120 may estimate the missing information (e.g., volume, size distribution, demand vector) based on previously collected counters values.

Further, above-mentioned information will be repetitively updated. The tracking device 100 may send consolidated and updated coflow information (e.g., structure, status, counters, and inferred parameters) to the scheduling device 300 for the optimization of coflow traffic.

As depicted in FIG. 4, the actual information retrieval can begin before a coflow is generated. For instance, for the case of MapReduce, since the coflow is the result of fetching data from several mappers, the coflow will only start when all mappers are finished. While mappers are still running, the tracking device 100 can retrieve the information related to the allocated endpoints from which the individual flows of the coflow will be generated. When the mappers are all finished, the tracking device 100 can infer missing data (i.e., as "Inference step" shown in FIG. 4) such as the volume of data each individual flow will transfer. This information can be used by a network controller, e.g., the network controller 10 as shown in FIG. 3, to configure the edge switches that will enforce traffic scheduling (e.g., rate control). After the Reduce phase has started and the active coflow is identified, all relevant counter values can be updated during the Reduce phase in order to monitor the progress of active flows. It is worth to remark that, until mapper nodes finish their tasks, traffic scheduling algorithms can be configured in advance to accommodate the upcoming coflow generated in the shuffle phase.

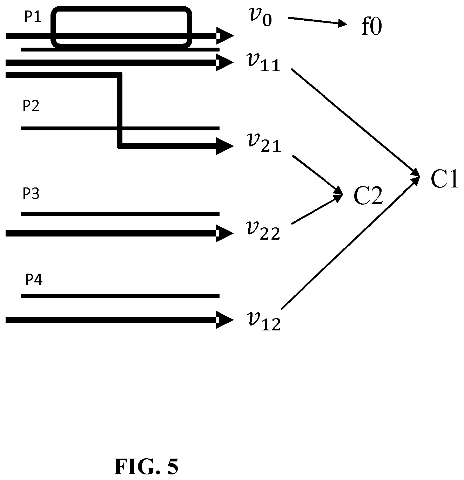

FIG. 5 shows a coflow traffic on a non-blocking switch according to an embodiment of the disclosure. In particular, this embodiment shows the impact of the availability of coflow information on the minimization of completion time. As depicted in FIG. 5, the input traffic is represented by two coflows C1 and C2, and a background flow f0. Coflow C1 has two flows: f11 with volume v11 and f12 with volume v12, Coflow C2 has two flows: f21 with volume v21 and flow f22 with volume v22, and the background traffic flow f0 has a volume v0. The release time of all flows is at time t = 0 and the port capacity in the non-blocking switch is 1.

Considering the standard optimization of the cumulative coflow completion time, the cumulative coflow completion time is a sum of the CCTs of C1 and C2, i.e., min (CCT(C1) + CCT(C2)).

The optimal solution requires indeed the background traffic to be scheduled after the two coflows C1 and C2 have been transferred. For the sake of the example, the capacity of each link in the big switch model may be normalized to one volume unit per second.

In the case where no information is available, the network capacity may be shared equally thanks to transmission control protocol (TCP). Flows share the input link among flows f11, f21, and f0 until the shortest flow terminates, and only at that point, the link is shared by flows f21 and f0. For instance, the resulting cumulative CCT is of 16s. In the case where information on the coflow structure is available, but not on the volumes, the background flow f0 is correctly scheduled after the two coflows, and under the equal share operated by TCP, the resulting cumulative CCT is 12s. In this example, inferring the coflow structure permits a reduction of the objective function of 33% compared to the agnostic strategy. Finally, in the case where both of the coflow structure and the volumes are known to the scheduler, e.g., the scheduling device 300, the actual optimal scheduling operated by the Shortest Effective Bottleneck First (SEBF) heuristics proposed in a conventional solution may be applied. Leading for our example at hand to optimal cumulative CCT of 10s. In this example, inferring both the coflow structures and the flow volumes permits a reduction of the objective function of 60% compared to the agnostic strategy.

This embodiment shows that collecting and inferring missing coflow information significantly increases a performance of a coflow-scheduling device in view of minimizing CCT.

An embodiment of this disclosure presents a simple method to infer the volume of data that each flow will transfer in a coflow. In particular, the tracking device 100 as shown in FIG. 1 or FIG. 3, can retrieve application counters to derive a size of a coflow and a size of coflows in MapReduce. Indeed, as the shuffle phase only starts when all mappers are done and MapReduce (i.e., the one or more external applications as shown in FIG. 1 or FIG. 3) can tell how much data will be sent (e.g., MAP_OUTPUT_BYTES / RECORDS counter). Using the knowledge of the number of flows in a coflow, individual flows volumes can be estimated by dividing the counter (MAP_OUTPUT_BYTES) by the number of flows. The tracking device 100 can update this information and update the remaining volumes of individual flows by retrieving other application counters to know how much data has been received at destination nodes. For instance, in MapReduce, reducers are producing useful counters (e.g., REDUCE_INPUT_RECORDS counter) to update the remaining volumes. Comparing the number of key/value records that have been received and the number of records that had to be transferred, missing information about the remaining volumes of individual flows can be estimated.

According to other embodiments of this disclosure, other advanced methods based on machine learning can also be used. A machine learning module can use any deterministic data available before a coflow starts as input. That is, retrieved data that is available before a coflow starts can be used as the input of a trained model that infers volumes of individual flows. The model should be trained offline, and also be dynamically reinforced online. A history of coflow statistics may for instance be used. Further, it may be useful to use the identity of nodes with higher computation power, as they are likely to have a faster data generation.

An embodiment of this disclosure further provides examples of API calls to MapReduce API.

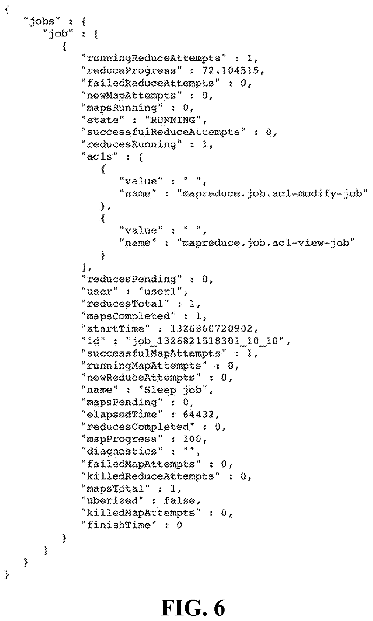

In particular, how to retrieve information on the coflow structure in practice through some sample usage of the MapReduce APIs in Hadoop according to the embodiment of this disclosure is illustrated in FIG. 6. Given a MapReduce application identifier collected from the YARN APIs, a request is sent to the Jobs API. The corresponding response body is as shown in FIG. 6. It exhibits a set of parameters related to the associated MapReduce jobs. In this embodiment, there is only one job which is still running, as shown by the value "RUNNING" of the "state" field. The job involves one mapper and one reducer that is the values of the "reducesTotal" and "mapsTotal" fields. Thus, this job creates one coflow (the shuffle) consisting of only one flow going from the mapper node to the reducer node. The response also gives information about the job progress. Indeed, the "reduceProgress" and "mapProgress" fields indicate the progress of every computation stage of the job. Based on this, it is able to follow the mappers' progress to know when a coflow is going to start (i.e., when "mapProgress" reaches 100%). Hence, we can provide an estimate of the release time of a coflow, corresponding to the starting time of the shuffle phase for the corresponding job.

In the example, the Map phase has finished and the Reduce phase is still running ("reduceProgress" is around 72%). The job identifier is given by the "id" field and it can be used to track more useful information. All related tasks can be accessed using the job ID.

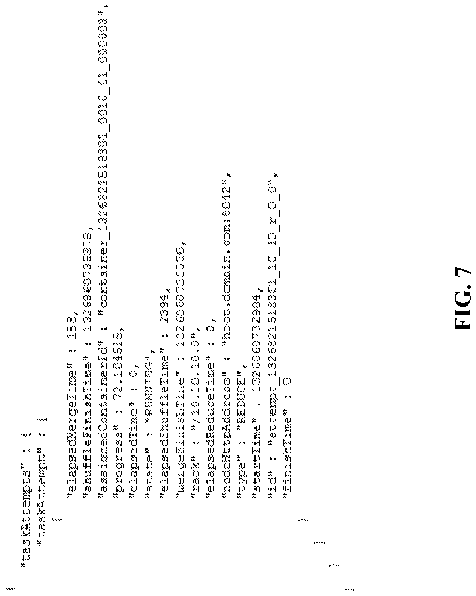

Furthermore, information about a specific task can be collected. FIG. 7 shows a response body from the Task Attempts API related to the reduce task as previously discussed. In this embodiment, the endpoint address is encoded in the "nodeHTTPAddress" field, using the internal uniform resource locator (URL) encoding / domain name system (DNS) of MapReduce. Hence, using queries to this API for each task of the job, allows to retrieve the location of each end-point of all flows, which further allows to reconstruct the structure of a coflow.

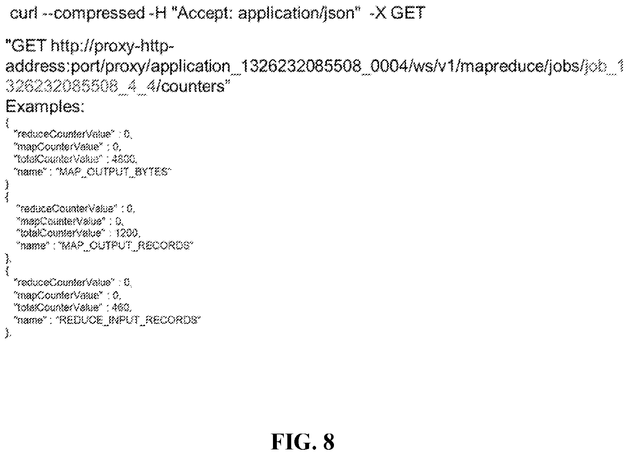

To illustrate how to get information about sizes of a coflow and its flows, FIG. 8 further shows samples of the response body from a Job Counters API query according to an embodiment of the disclosure.

The coflow size can be retrieved from the MAP_OUTPUT_BYTES counter when mappers have finished. Moreover, the remaining volume of a flow can be inferred looking at the difference between MAP_OUTPUT_RECORDS and REDUCE_INPUT_RECORDS.

In the MapReduce case, the tracking device 100 according to embodiments of this disclosure can be equipped with dedicated procedures to determine the exact coflow structure. In practice, it is possible to identify all the pairs of potential source and destination IP of the nodes which can generate a flow for a particular coflow, even before the related job enters the actual shuffle phase and the flows become active. This raises the question of how to determine in practice where each map task is installed, and where the corresponding reducer task is located within the network fabric. In particular, in the recent versions of the MapReduce framework, the placement of containers is decided by YARN. However, YARN APIs do not expose IP addresses directly, endpoints are encoded under the form of an URL, for instance: host.domain.com:8042. The port number 8042 actually identify the IP endpoint. The YARN service registry can be queried to retrieve the original IP address, especially in this case by the coflow information retrieval module 110 as shown in FIG. 3. The default port for the shuffle phase can also be used to identify flows. Default shuffle port may be mapreduce.shuffle.port = 13562.

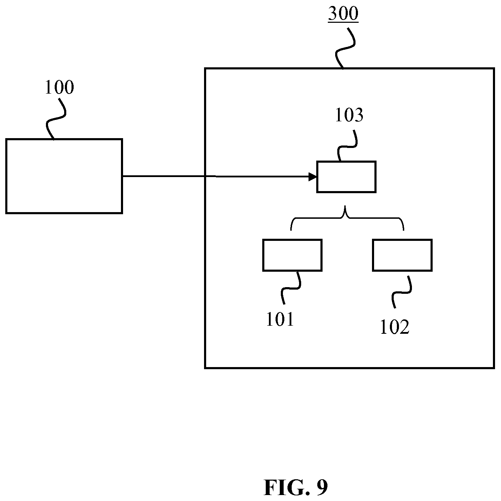

According to another embodiment of the disclosure, a scheduling device 300 for scheduling one or more coflows in a network is shown in FIG. 9. In particular, the scheduling device 300 is configured to obtain a merged coflow information 103 of the one or more coflows from a tracking device 100. Possibly, the tracking device 100 may be a tracking device 100 as shown in FIG. 1 or FIG. 3. In particular, the merged coflow information 103 of the one or more coflows is merged based on a first set of coflow information 101 of the one or more coflows and a second set of coflow information 102 of the one or more coflows. The first set of coflow information 101 of the one or more coflows is indicative of information retrieved from the one or more coflows, and the second set of coflow information 102 of the one or more coflows is estimated based on the first set of coflow information 101 of the one or more coflows. The scheduling device 300 is further configured to adapt the scheduling of the one or more coflows according to the merged coflow information 103 of the one or more coflows.

The scheduling device 300 as shown in FIG. 9 may also be the scheduling device 300 shown in FIG. 1 or FIG. 3. Notably, as shown in FIG. 3, according to an embodiment of the disclosure, the scheduling device 300 of FIG. 9 may be hosted on the network controller 10.

According to an embodiment of the disclosure, the scheduling device 300 may be further configured to repetitively obtain updated merged coflow information 103 of the one or more coflows from the tracking device 100. Further, the scheduling device 300 may be configured to repetitively adapt the scheduling of the one or more coflows according to the updated merged coflow information 103 of the one or more coflows.

According to an embodiment of the disclosure, the scheduling device 300 may be further configured to minimize an average completion time of the one or more coflows, based on the merged coflow information 103 of the one or more coflows, and/or the updated merged coflow information 103 of the one or more coflows. Optionally, the scheduling device 300 may be further configured to minimize a maximum completion time of the one or more coflows, based on the merged coflow information 103 of the one or more coflows, and/or the updated merged coflow information 103 of the one or more coflows.

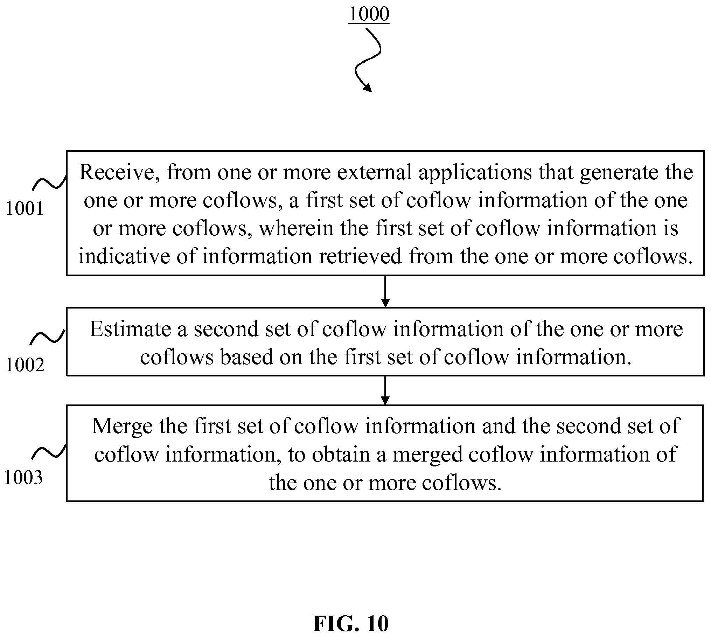

FIG. 10 shows a method 1000 according to an embodiment of the disclosure, particularly for tracking one or more coflows in a network. In a particular embodiment, the method 1000 is performed by a tracking device 100 shown in FIG. 1. In particular, each coflow comprises one or more flows. The method 1000 comprises a step 1001 of receiving, from one or more external applications 200 that generate the one or more coflows, a first set of coflow information 101 of the one or more coflows. In particular, the first set of coflow information 101 is indicative of information retrieved from the one or more coflows. The method 1000 further comprises a step 1002 of estimating a second set of coflow information 102 of the one or more coflows based on the first set of coflow information 101, and a step 1003 of merging the first set of coflow information 101 and the second set of coflow information 102, to obtain a merged coflow information 103 of the one or more coflows.

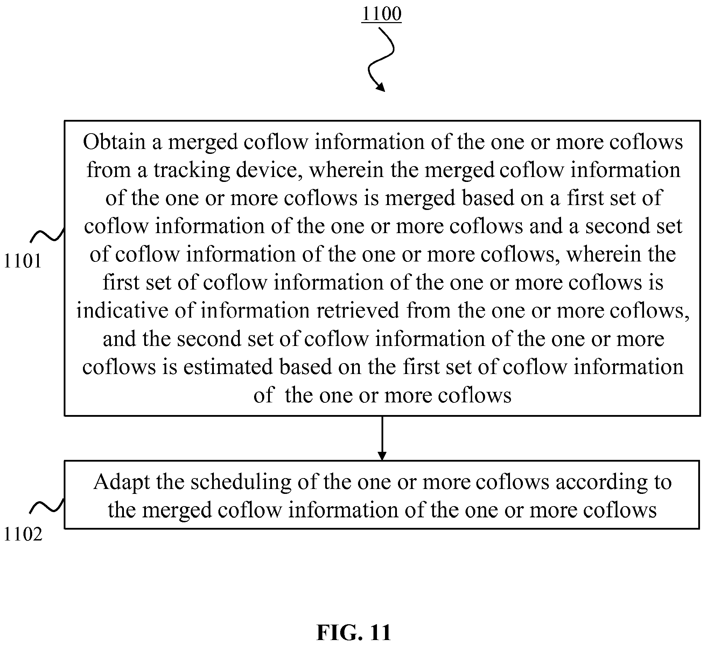

FIG. 11 shows a method 1100 according to an embodiment of the disclosure, particularly for scheduling one or more coflows in a network. In a particular embodiment, the method 1100 is performed by a scheduling device 300 shown in FIG. 9 In particular, each coflow comprises one or more flows. The method 1100 comprises a step 1101 of obtaining a merged coflow information 103 of the one or more coflows from a tracking device 100. In particular, the merged coflow information 103 of the one or more coflows is merged based on a first set of coflow information 101 of the one or more coflows and a second set of coflow information 102 of the one or more coflows, wherein the first set of coflow information 101 of the one or more coflows is indicative of information retrieved from the one or more coflows, and the second set of coflow information 102 of the one or more coflows is estimated based on the first set of coflow information 101 of the one or more coflows. The method 1100 further comprises a step 1102 of adapting the scheduling of the one or more coflows according to the merged coflow information 103 of the one or more coflows.

To summarize, embodiments of this disclosure provide a coflow tracking and scheduling system. In particular, a coflow tracking module (i.e., the tracking device 100 as shown in FIG. 1, FIG. 3 or FIG. 9), for instance in the network controller, may retrieve available coflow information from big data applications (e.g., MapReduce) and resource management frameworks (e.g., YARN for Hadoop). It consolidates and continuously updates information about coflows (e.g., layout, status) and infers missing information (e.g., flow volumes) that are useful for scheduling. Further, it passes this knowledge to a traffic scheduler (i.e., the scheduling device 300 as shown in FIG. 1, FIG. 3 or FIG. 9) that decides bandwidth sharing in view of optimizing coflow completion time (e.g., average, max, deadlines). Embodiments of this disclosure also provide methods to extract useful coflow information for traffic scheduling, such as coflow information retrieval (layout, status, counters), and inference of missing information (e.g., volume, flow size distribution, demand vector).

Main benefits of the present disclosure may include that the coflow tracking module (i.e., the tracking device 100) is part of the network controller (no need to modify big data application managers), and it can work with several applications in parallel.

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the tracking device 100 and/or the scheduling device 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the tracking device 100 and/or the scheduling device 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

The invention is defined in the independent claims. Advantageous features are described in the dependent claims.

## Claims

1. A tracking device (100) for tracking one or more coflows in a network, wherein each coflow comprises one or more flows, wherein the tracking device (100) is configured to:
receive, from one or more external applications (200) that generate the one or more coflows, a first set of coflow information (101) of the one or more coflows, wherein the first set of coflow information (101) is indicative of information retrieved from the one or more coflows;
estimate a second set of coflow information (102) of the one or more coflows based on the first set of coflow information, wherein the second set of coflow information (102) of each coflow of the one or more coflows comprises one or more of the following parameters: a size of the coflow, a remaining size of the coflow, a size distribution of the one or more flows of the coflow, a number of the one or more flows of the coflow, a length of the coflow, and one or more demand vectors of the one or more flows of the coflow; and
merge the first set of coflow information (101) and the second set of coflow information (102), to obtain a merged coflow information (103) of the one or more coflows;
provide the merged coflow information (103) of the one or more coflows to a scheduling device (300) for scheduling the one or more coflows in the network.

2. The tracking device (100) according to claim 1, wherein
the first set of coflow information (101) of each coflow of the one or more coflows is indicative of one or more of the following parameters: a list of the one or more flows of the coflow, a source node and a destination node of each of the one or more flows of the coflow, a number of the one or more flows of the coflow, a status of the one or more flows of the coflow, one or more counters associated with the coflow, an expected completion time of the coflow, a priority level of the coflow, and a type of the coflow.

3. The tracking device (100) according to claims 2, configured to:
estimate a remaining size of at least one coflow of the one or more coflows based on the one or more counters associated with the at least one coflow.

4. The tracking device (100) according to claims 2 or 3, configured to:
estimate a size of an individual flow of the one or more flows of the coflow by dividing the size of the coflow by the number of the one or more flows of the coflow.

5. The tracking device (100) according to one of the claims 1 to 4, further configured to:
repetitively receive updated first set of coflow information (101) of the one or more coflows in the network;
repetitively update the second set of coflow information (102) of the one or more coflows; and
repetitively update the merged coflow information (103) of the one or more coflows.

6. The tracking device (100) according to one of the claims 1 to 5, wherein
the merged coflow information (103) of the one or more coflows comprises: a coflow ID of each coflow of the one or more coflows, and at least one of the first set of coflow information (101) of the one or more coflows, and the second set of coflow information (102) of the one or more coflows.

7. The tracking device (100) according to one of the claims 1 to 6, further configured to:
receive the first set of coflow information (101) of the one or more coflows from one or more application program interfaces and/or one or more application log files, particularly from a big data application and/or from a resource manager.

8. A method (1000) for tracking one or more coflows in a network, wherein each coflow comprises one or more flows, wherein the method comprises:
receiving (1001), from one or more external applications (200) that generate the one or more coflows, a first set of coflow information (101) of the one or more coflows, wherein the first set of coflow information (101) is indicative of information retrieved from the one or more coflows;
estimating (1002) a second set of coflow information (102) of the one or more coflows based on the first set of coflow information (101), wherein the second set of coflow information (102) of each coflow of the one or more coflows comprises one or more of the following parameters: a size of the coflow, a remaining size of the coflow, a size distribution of the one or more flows of the coflow, a number of the one or more flows of the coflow, a length of the coflow, and one or more demand vectors of the one or more flows of the coflow; and
merging (1003) the first set of coflow information (101) and the second set of coflow information (102), to obtain a merged coflow information (103) of the one or more coflows, and
providing the merged coflow information (103) of the one or more coflows to a scheduling device (300) for scheduling the one or more coflows in the network.

9. A computer program product comprising a program code for carrying out, when implemented on a processor, the method according to claim 8.

## Patentansprüche

1. Überwachungsvorrichtung (100) zum Überwachen eines oder mehrerer Co-Flows in einem Netzwerk, wobei jeder Co-Flow einen oder mehrere Flows umfasst, wobei die Überwachungsvorrichtung (100) zu Folgendem konfiguriert ist:
Empfangen, von einer oder mehreren externen Anwendungen (200), die den einen oder die mehreren Co-Flows erzeugen, eines ersten Satzes von Co-Flow-Informationen (101) des einen oder der mehreren Co-Flows, wobei der erste Satz von Co-Flow-Informationen (101) Informationen angibt, die von dem einen oder den mehreren Co-Flows abgerufen werden;
Schätzen eines zweiten Satzes von Co-Flow-Informationen (102) des einen oder der mehreren Co-Flows basierend auf dem ersten Satz von Co-Flow-Informationen, wobei der zweite Satz von Co-Flow-Informationen (102) jedes Co-Flows des einen oder der mehreren Co-Flows einen oder mehrere der folgenden Parameter umfasst: eine Größe des Co-Flows, eine verbleibende Größe des Co-Flows, eine Größenverteilung des einen oder der mehreren Flows des Co-Flows, eine Anzahl des einen oder der mehreren Flows des Co-Flows, eine Länge des Co-Flows und einen oder mehrere Nachfragevektoren des einen oder der mehreren Flows des Co-Flows; und
Zusammenführen des ersten Satzes von Co-Flow-Informationen (101) und des zweiten Satzes von Co-Flow-Informationen (102), um zusammengeführte Co-Flow-Informationen (103) des einen oder der mehreren Co-Flows zu erlangen;
Bereitstellen der zusammengeführten Co-Flow-Informationen (103) des einen oder der mehreren Co-Flows an eine Planungsvorrichtung (300) zum Planen des einen oder der mehreren Co-Flows in dem Netzwerk.

2. Überwachungsvorrichtung (100) nach Anspruch 1, wobei
der erste Satz von Co-Flow-Informationen (101) jedes Co-Flows des einen oder der mehreren Co-Flows einen oder mehrere der folgenden Parameter angibt: eine Liste des einen oder der mehreren Flows des Co-Flows, einen Quellknoten und einen Zielknoten jedes des einen oder der mehreren Flows des Co-Flows, eine Anzahl des einen oder der mehreren Flows des Co-Flows, einen Status des einen oder der mehreren Flows des Co-Flows, einen oder mehrere Zähler, die mit dem Co-Flow verknüpft sind, eine erwartete Abschlusszeit des Co-Flows, eine Prioritätsstufe des Co-Flows und einen Typ des Co-Flows.

3. Überwachungsvorrichtung (100) nach Anspruch 2, die zu Folgendem konfiguriert ist:
Schätzen einer verbleibenden Größe von mindestens einem Co-Flow des einen oder der mehreren Co-Flows basierend auf dem einen oder den mehreren Zählern, die mit dem mindestens einen Co-Flow verknüpft sind.

4. Überwachungsvorrichtung (100) nach Anspruch 2 oder 3, die zu Folgendem konfiguriert ist:
Schätzen einer Größe eines einzelnen Flows des einen oder der mehreren Flows des Co-Flows, durch Dividieren der Größe des Co-Flows durch die Anzahl des einen oder der mehreren Flows des Co-Flows.

5. Überwachungsvorrichtung (100) nach einem der Ansprüche 1 bis 4, die ferner zu Folgendem konfiguriert ist:
wiederholtes Empfangen eines aktualisierten ersten Satzes von Co-Flow-Informationen (101) des einen oder der mehreren Co-Flows in dem Netzwerk;
wiederholtes Aktualisieren des zweiten Satzes von Co-Flow-Informationen (102) des einen oder der mehreren Co-Flows; und
wiederholtes Aktualisieren der zusammengeführten Co-Flow-Informationen (103) des einen oder der mehreren Co-Flows.

6. Überwachungsvorrichtung (100) nach einem der Ansprüche 1 bis 5, wobei
die zusammengeführten Co-Flow-Informationen (103) des einen oder der mehreren Co-Flows Folgendes umfassen: eine Co-Flow-ID jedes Co-Flows des einen oder der mehreren Co-Flows und mindestens einen des ersten Satzes von Co-Flow-Informationen (101) des einen oder der mehreren Co-Flows und des zweiten Satzes von Co-Flow-Informationen (102) des einen oder der mehreren Co-Flows.

7. Überwachungsvorrichtung (100) nach einem der Ansprüche 1 bis 6, die ferner zu Folgendem konfiguriert ist:
Empfangen des ersten Satzes von Co-Flow-Informationen (101) des einen oder der mehreren Co-Flows von einer oder mehreren Anwendungsprogrammschnittstellen und/oder einer oder mehreren Anwendungsprotokolldateien, insbesondere von einer Big-Data-Anwendung und/oder von einem Ressourcenmanager.

8. Verfahren (1000) zum Überwachen eines oder mehrerer Co-Flows in einem Netzwerk, wobei jeder Co-Flow einen oder mehrere Flows umfasst, wobei das Verfahren Folgendes umfasst:
Empfangen (1001), von einer oder mehreren externen Anwendungen (200), die den einen oder die mehreren Co-Flows erzeugen, eines ersten Satzes von Co-Flow-Informationen (101) des einen oder der mehreren Co-Flows, wobei der erste Satz von Co-Flow-Informationen (101) Informationen angibt, die von dem einen oder den mehreren Co-Flows abgerufen werden;
Schätzen (1002) eines zweiten Satzes von Co-Flow-Informationen (102) des einen oder der mehreren Co-Flows basierend auf dem ersten Satz von Co-Flow-Informationen (101), wobei der zweite Satz von Co-Flow-Informationen (102) jedes Co-Flows des einen oder der mehreren Co-Flows einen oder mehrere der folgenden Parameter umfasst: eine Größe des Co-Flows, eine verbleibende Größe des Co-Flows, eine Größenverteilung des einen oder der mehreren Flows des Co-Flows, eine Anzahl des einen oder der mehreren Flows des Co-Flows, eine Länge des Co-Flows und einen oder mehrere Nachfragevektoren des einen oder der mehreren Flows des Co-Flows; und
Zusammenführen (1003) des ersten Satzes von Co-Flow-Informationen (101) und des zweiten Satzes von Co-Flow-Informationen (102), um zusammengeführte Co-Flow-Informationen (103) des einen oder der mehreren Co-Flows zu erlangen, und
Bereitstellen der zusammengeführten Co-Flow-Informationen (103) des einen oder der mehreren Co-Flows an eine Planungsvorrichtung (300) zum Planen des einen oder der mehreren Co-Flows in dem Netzwerk.

9. Computerprogrammprodukt, umfassend einen Programmcode zum Durchführen des Verfahrens nach Anspruch 8, wenn dieser auf einem Prozessor umgesetzt wird.

## Revendications

1. Dispositif de suivi (100) permettant de suivre un ou plusieurs co-flux dans un réseau, dans lequel chaque co-flux comprend un ou plusieurs flux, dans lequel le dispositif de suivi (100) est configuré pour :
recevoir, à partir d'une ou plusieurs applications externes (200) qui génèrent le ou les co-flux, un premier ensemble d'informations de co-flux (101) du ou des co-flux, dans lequel le premier ensemble d'informations de co-flux (101) est indicatif d'informations récupérées à partir du ou des co-flux ;
estimer un second ensemble d'informations de co-flux (102) du ou des co-flux sur la base du premier ensemble d'informations de co-flux, dans lequel le second ensemble d'informations de co-flux (102) de chaque co-flux du ou des co-flux comprend un ou plusieurs des paramètres suivants : une taille du co-flux, une taille restante du co-flux, une distribution de taille du ou des flux du co-flux, un nombre du ou des flux du co-flux, une longueur du co-flux, et un ou plusieurs vecteurs de demande du ou des flux du co-flux ; et
fusionner le premier ensemble d'informations de co-flux (101) et le second ensemble d'informations de co-flux (102), pour obtenir des informations de co-flux fusionnées (103) du ou des co-flux ;
fournir les informations de co-flux fusionnées (103) du ou des co-flux à un dispositif de planification (300) pour planifier le ou les co-flux dans le réseau.

2. Dispositif de suivi (100) selon la revendication 1, dans lequel
le premier ensemble d'informations de co-flux (101) de chaque co-flux du ou des co-flux est indicatif d'un ou plusieurs des paramètres suivants : une liste du ou des flux du co-flux, un nœud source et un nœud de destination de chacun du ou des flux du co-flux, un nombre du ou des flux du co-flux, un état du ou des flux du co-flux, un ou plusieurs compteurs associés au co-flux, un temps d'achèvement prévu du co-flux, un niveau de priorité du co-flux, et un type de co-flux.

3. Dispositif de suivi (100) selon les revendications 2, configuré pour :
estimer une taille restante d'au moins un co-flux du ou des co-flux sur la base du ou des compteurs associés à l'au moins un co-flux.

4. Dispositif de suivi (100) selon les revendications 2 ou 3, configuré pour :
estimer une taille d'un flux individuel du ou des flux du co-flux en divisant la taille du co-flux par le nombre du ou des flux du co-flux.

5. Dispositif de suivi (100) selon l'une des revendications 1 à 4, également configuré pour :
recevoir de manière répétitive un premier ensemble d'informations de co-flux (101) mis à jour du ou des co-flux dans le réseau ;
mettre à jour de manière répétitive le second ensemble d'informations de co-flux (102) du ou des co-flux ; et
mettre à jour de manière répétitive les informations de co-flux fusionnées (103) du ou des co-flux.

6. Dispositif de suivi (100) selon l'une des revendications 1 à 5, dans lequel
les informations de co-flux fusionnées (103) du ou des co-flux comprennent : un identifiant de co-flux de chaque co-flux du ou des co-flux, et au moins l'un du premier ensemble d'informations de co-flux (101) du ou des co-flux, et du second ensemble d'informations de co-flux (102) du ou des co-flux.

7. Dispositif de suivi (100) selon l'une des revendications 1 à 6, également configuré pour :
recevoir le premier ensemble d'informations de co-flux (101) du ou des co-flux provenant d'une ou plusieurs interfaces de programme d'application et/ou d'un ou plusieurs fichiers journaux d'application, en particulier d'une application big data et/ou d'un gestionnaire de ressources.

8. Procédé (1000) de suivi du ou des co-flux dans un réseau, dans lequel chaque co-flux comprend un ou des flux, dans lequel le procédé comprend :
la réception (1001), à partir d'une ou plusieurs applications externes (200) qui génèrent le ou les co-flux, d'un premier ensemble d'informations de co-flux (101) du ou des co-flux, dans lequel le premier ensemble d'informations de co-flux (101) est indicatif d'informations récupérées à partir du ou des co-flux ;
l'estimation (1002) d'un second ensemble d'informations de co-flux (102) du ou des co-flux sur la base du premier ensemble d'informations de co-flux (101), dans lequel le second ensemble d'informations de co-flux (102) de chaque co-flux du ou des co-flux comprend un ou plusieurs des paramètres suivants : une taille du co-flux, une taille restante du co-flux, une distribution de taille du ou des flux du co-flux, un nombre du ou des flux du co-flux, une longueur du co-flux, et un ou plusieurs vecteurs de demande du ou des flux du co-flux ; et
la fusion (1003) du premier ensemble d'informations de co-flux (101) et du second ensemble d'informations de co-flux (102), pour obtenir des informations de co-flux fusionnées (103) du ou des co-flux, et
la fourniture des informations de co-flux fusionnées (103) du ou des co-flux à un dispositif de planification (300) pour planifier le ou les co-flux dans le réseau.

9. Produit de programme informatique comprenant un code de programme pour réaliser, lorsqu'il est mis en œuvre sur un processeur, le procédé selon la revendication 8.
